# EUROPÄISCHE PATENTSCHRIFT

(11) **EP 3 111 745 B1**
(45) Veröffentlichungstag und Bekanntmachung des Hinweises auf die Patenterteilung: **26.06.2019**
(21) Anmeldenummer: 16163787.1
(22) Anmeldetag: 05.04.2016
(51) Int. Cl.: A01F 15/07, A01F 15/18

(54) **REPARATUR-, UMBAU- BZW. NACHRÜSTSATZ FÜR EINE RUNDBALLENPRESSE**
REPAIR, CONVERSION OR RETROFIT KIT FOR A MACHINE FOR FORMING CYLINDRICAL BALES
COMPLÉMENT D'ÉQUIPEMENT, DE RÉPARATION OU DE TRANSFORMATION POUR UNE PRESSE À BALLES RONDES

(30) Priorität: 03.07.2015 DE 102015212482
(43) Veröffentlichungstag der Anmeldung: 04.01.2017
(73) Patentinhaber: ContiTech Transportbandsysteme GmbH, 30165 Hannover (DE)
(72) Erfinder: Behrens, Carsten, 37434 Bilshausen (DE); Stange, Lysander, 37154 Northeim (DE)
(74) Vertreter: Finger, Karsten

(56) Entgegenhaltungen:
- EP-A1- 2 695 512
- US-A- 3 964 246
- US-A- 5 219 063
- US-A- 5 415 913
- Transtec Foerdertechnik Gmbh: "Riemen Rundballenpresse, Rundballenpressgurt, Pressgurt, Ersatzriemen, John Deere, Welger, Pöttinger, Claas, New Holland, Hesston", , 24 December 2014 (2014-12-24), XP055422927, Retrieved from the Internet: URL:https://web.archive.org/web/2014122419 3056/http://www.transtec-gmbh.de:80/foerde rgurte/foerdergurte-landwirtschaft/riemen- rundballenpresse [retrieved on 2017-11-08]
- Contitech Ag: "CONTI Round-bale Compressor Belts for Hay and Straw Bale Compressors - Special-Purpose Conveyor Belts and Products - ContiTech AG", , 2 April 2015 (2015-04-02), XP055422929, Retrieved from the Internet: URL:https://web.archive.org/web/2015040222 2157/http://www.contitech.de:80/pages/prod ukte/transportbaender/cbgspecial/special_l andmaschinen_en.html [retrieved on 2017-11-08]

## Beschreibung

Die Erfindung betrifft eine Rundballenpresse gemäß dem Oberbegriff des Anspruchs 1.

In der Landwirtschaft werden sogenannte Rundballenpressen eingesetzt, um halmförmiges Erntegut zu Ballen zu pressen. Hierzu wird das Erntegut in den Ballenpressraum befördert und durch diesen umgebende Pressmittel wie z.B. Pressriemen zu einem zylindrischen Ballen verpresst, welcher bei Erreichen einer vorgegebenen Größe auf das Feld ausgebracht wird. Derartige Rundballenpressen sind z.B. aus der DE 10 2011 003 727 A1, aus der US 5,415,013 A1 sowie aus der EP 2 695 512 A1 bekannt.

Die Pressriemen sind endlos geschlossen ausgebildet und verlaufen parallel zueinander. Die Pressriemen können offen hergestellt und dann mittels mechanischer Verbindungselemente formschlüssig geschlossen werden, siehe z.B. US 5,415,013 A1. Dieser Art der Verbindung sind Grenzen bei ca. 300 mm Riemenbreite gesetzt, weil sich breitere Pressriemen innerhalb der Rundballenpresse aufgrund ungleicher Kraftverteilungen im Pressriemen nur sehr schwierig steuern lassen. Breitere Pressriemen werden daher geschlossen gewickelt hergestellt, siehe z.B. US 2008/0105517 A1. Üblich sind mehrere parallel zueinander verlaufende Pressriemen in einer Rundballenpresse, siehe z.B. DE 10 2011 003 727 A1 oder EP 2 695 512 A1, oder auch ein einzelner Pressriemen.

Da die Spalten in Längsrichtung zwischen den einzelnen Pressriemen zu Verlusten des Pressgutes führen können, geht die Entwicklung dahin, möglichst wenig Pressriemen in einer Rundballenpresse einzusetzen. Diese werden entsprechend breit ausgebildet und können dann aus den zuvor genannten Gründen nur noch endlos hergestellt werden. Daher werden derzeit in Rundballenpressen üblicherweise ein, zwei oder drei endlos gewickelte Pressriemen eingesetzt,

Die Druckschrift US 3,964,246 offenbart eine Rundballenpresse mit einem unteren breiten Pressriemen und einer Vielzahl oberer schmalerer Pressriemen.

Pressriemen können im Einsatz beschädigt werden und sogar reißen, wodurch der Einsatz der Rundballenpresse unterbrochen werden kann. Ein endlos gewickelter Pressriemen kann dann mittels Kaltvulkanisation gegebenenfalls repariert werden, was jedoch eine entsprechende Ausrüstung erfordert, welche aufwändig und teuer sein kann. Auch kann diese Art der Reparatur den Aus- und Einbau des Pressriemens erfordern und die Durchführung der Kaltvulkanisation kann bis zu 24 Stunden dauern, Soll ein endlos gewickelter Pressriemen ersetzt werden, führt auch dies zu einem hohen Zeitaufwand von üblicherweise bis zu einem Tag. In beiden Fällen können derartige Maßnahmen üblicherweise nur von geschultem Fachpersonal durchgeführt werden, was den Aufwand, den zeitlichen Verzug und die Kosten weiter erhöht.

Eine Aufgabe der vorliegenden Erfindung ist es daher, den Austausch eines beschädigten Pressriemens einer Rundballenpresse zu vereinfachen und bzw. oder zu beschleunigen. Insbesondere soll der Austausch vom Anwender selbst ohne Fachpersonal und bzw. oder ohne besondere Ausrüstung sowie möglichst einfach und schnell durchgeführt werden können. Auch soll nach dem Austausch des beschädigten Pressriemens sofort die volle Zugbelastung zur Verfügung stehen.

Diese Aufgabe wird erfindungsgemäß durch eine Rundballenpresse mit den Merkmalen gemäß Anspruch 1 gelöst. Vorteilhafte Weiterbildungen sind in den Unteransprüchen beschrieben.

Somit betrifft die vorliegende Erfindung eine Rundballenpresse mit einem Reparatur-, Umbau- bzw. Nachrüstsatz. Dieser Satz kann dafür genutzt werden, einen beschädigten Pressriemen zu ersetzen und hierdurch die Rundballenpresse zu reparieren. Dies kann als temporäre Lösung angewendet werden, um den aktuellen Einsatz der Rundballenpresse möglichst schnell fortsetzten und abschließen zu können, so dass danach wieder ein "Originalpressriemen" aufgezogen werden kann. Dieser Satz kann aber auch dafür genutzt werden, einen intakten Pressriemen einer Rundballenpresse zu ersetzen und hierdurch die Rundballenpresse dauerhaft umzurüsten bzw. nachzurüsten.

Die Rundballenpresse ist gekennzeichnet durch wenigstens zwei endlos schließbare Ersatzpressriemen, welche in ihrer gemeinsamen Breite im Wesentlichen der Breite eines zu ersetzenden endlos geschlossenen Pressriemens entsprechen. Der zu ersetzende Pressriemen ist insbesondere ein geschlossen gewickelter Pressriemen, welcher insbesondere als Originalzubehör der Rundballenpresse ausgeführt ist. Die wenigstens zwei Ersatzpressriemen entsprechen vorzugsweise in ihrer Länge und Dicke sowie strukturellen und qualitativen Beschaffenheit im Wesentlichen den Eigenschaften des zu ersetzenden Pressriemens. Die wenigstens zwei Ersatzpressriemen weisen gemeinsam etwa die gleiche Breite auf wie der zu ersetzende Pressriemen, so dass durch diesen Austausch möglichst kein Unterschied in der Funktion der Rundballenpresse und in der Qualität der erzeugten Rundballenpresse entsteht.

Der vorliegenden Erfindung liegt dabei die Erkenntnis zu Grunde, dass es deutlich schneller und einfacher ist, einen insbesondere geschlossen gewickelten Pressriemen durch zwei schmalere Ersatzpressriemen zu ersetzen. Dies kann insbesondere durch den Anwender der Rundballenpresse selbst sowie im Falle eines beschädigten Pressriemens z.B. direkt auf dem Feld erfolgen. Auch kann die Notwendigkeit von zusätzlichen Hilfsmitteln, Anlagen und bzw. oder Fachpersonal hierdurch reduziert bzw. vollständig vermieden werden. Dies alles kann die Stillstandzeiten der Rundballenpresse bei beschädigtem Pressriemen deutlich reduzieren. So kann der Einsatz der Rundballenpresse zeitnah fortgesetzt werden. Nach Abschluss des Einsatzes können die beiden Ersatzpressriemen dann immer noch durch einen endlos gewickelten Pressriemen ersetzt werden, um den Zustand vor der Reparatur wieder herzustellen. Auch können ältere und gebrauchte Rundballenpresse auf diese Weise einfach und schnell modernisiert werden.

Gemäß einem Aspekt der vorliegenden Erfindung sind die Ersatzpressriemen mittels Verbindungsmitteln kraftschlüssig und bzw. oder formschlüssig schließbar. Auf diese Weise kann eine sicher haltbare aber einfach herzustellende Verbindung geschaffen werden, um die Ersatzpressriemen endlos zu schließen. Insbesondere sind hierzu aufwändige Hilfsmittel, die z.B. eine Kaltvulkanisation erfordern würde, nicht erforderlich.

Gemäß einem weiteren Aspekt der vorliegenden Erfindung sind die Verbindungsmittel zumindest teilweise Hakenverbinder. Hakenverbinder sind zur endlosen Verbindung von Pressriemen besonders geeignet, weil die Haken an den beiden offenen Enden des Ersatzpressriemens werkseitig vorgesehen sein können, so dass zum Schließen der Verbindung lediglich die Haken ineinander gehakt bzw. mittels eines Gelenkselements verbunden werden müssen. Auch können mit Hakenverbindern geschlossene Ersatzpressriemen die gleiche bzw. eine vergleichbare Zugbelastung aufnehmen wie endlos gewickelte Pressriemen, so dass hierdurch die Rundballenpresse nach der Reparatur wie vorher weiterbetrieben werden kann. Vorzugsweise sind alle Verbindungsmittel als Hakenverbinder ausgebildet, um die zuvor beschriebenen Vorteile bestmöglich nutzen zu können.

Gemäß einem weiteren Aspekt der vorliegenden Erfindung weisen die Ersatzpressriemen die gleiche Breite auf. Dies ist vorteilhaft, weil innerhalb des Reparatur-, Umbau- bzw. Nachrüstsatzes lediglich eine Breite von Pressriemen verwendet werden kann. Dies vereinfacht die Herstellung und Anwendung des Reparatur-, Umbau- bzw. Nachrüstsatzes.

Gemäß einem weiteren Aspekt der vorliegenden Erfindung weist der Reparatur-, Umbau- bzw. Nachrüstsatz ferner wenigstens ein Führungsmittel auf, welches an der Rundballenpresse derart angeordnet werden kann, dass wenigstens zwei Ersatzpressriemen jeweils seitlich des Führungsmittels verlaufen können und hierdurch seitlich zueinander geführt werden können. Dieses zusätzliche Führungsmittel kann der seitlichen Beabstandung und seitlichen Führung der beiden Ersatzpressriemen zueinander dienen, so dass die Bewegung der beiden Ersatzpressriemen sicherer durchgeführt werden kann. Dieses zusätzliche Führungsmittel kann an der Rundballenpresse feststehend oder relativ zu dieser beweglich angeordnet sein, insbesondere mit einer rotierbaren Welle der Rundballenpresse mitrotierbar.

Gemäß einem weiteren Aspekt der vorliegenden Erfindung ist das Führungsmittel eine Zusatzführungsscheibe, welche an einer rotierbaren Welle der Rundballenpresse angeordnet werden kann. Diese rotierbaren Welle der Rundballenpresse ist eine solche, um welche herum die Pressriemen verlaufen. Derartige rotierbaren Welle in der Rundballenpresse weisen zur seitlichen Führung der Pressriemen bereits Führungsmittel in Form von Führungscheiben auf. Wird nun erfindungsgemäß ein ursprünglich vorhandener Pressriemen durch zwei Ersatzpressriemen ersetzt, kann die Zusatzführungscheibe an dieser rotierbare Welle zwischen den beiden Ersatzpressriemen angeordnet werden, um hinsichtlich der beiden Ersatzpressriemen die gleiche Aufgabe wie die bereits vorhandenen Führungscheiben zu übernehmen.

Gemäß einem weiteren Aspekt der vorliegenden Erfindung ist die Zusatzführungsscheibe geteilt ausgebildet, so dass sie um die Welle herum an dieser befestigt werden kann. Dies ermöglicht den nachträglichen Einbau der Zusatzführungscheibe, ohne hierfür die rotierbare Welle der Rundballenpresse entfernen zu müssen. Hierzu ist die Teilung der Zusatzführungscheiben in mindestens zwei Teilscheiben derartig ausgeführt, dass diese im geteilten Zustand eine ausreichend breite Öffnung in ihrer Umfangsrichtung aufweisen, um um die rotierbare Welle herum angeordnet werden zu können und sich im geschlossenen Zustand vollständig um die rotierbare Welle schließen zu lassen.

Gemäß einem weiteren Aspekt der vorliegenden Erfindung ist die Zusatzführungsscheibe als zwei Halbscheiben ausgebildet. Diese beiden Halbscheiben sind mit einer im Wesentlichen identischen Breite in ihrer Umfangsrichtung ausgebildet, so dass sie jeweils etwa 180° eines vollen Kreises umfassen und sich im zusammengesetzten Zustand gemeinsam um die rotierbare Welle schließen lassen. Hierdurch können zwei identische Halbscheiben verwendet werden, was die Herstellung vereinfacht. Auch wird so zwischen den beiden Halbscheiben eine breite Öffnung in Umfangsrichtung ausgebildet, so dass sich die beiden Halbscheiben sehr einfach an der rotierbaren Welle montieren lassen. Gleichzeitig minimiert die Zweiteilung der Zusatzführungsscheibe die Anzahl der Teilelemente, um die zuvor beschriebenen Vorteile zu realisieren.

Gemäß einem weiteren Aspekt der vorliegenden Erfindung weist der Reparatur-, Umbau- bzw. Nachrüstsatz ferner Befestigungsmitteln zum kraftschlüssigen und bzw. oder formschlüssigen Befestigen der Zusatzführungsscheibe an der Welle derart auf, dass eine Relativbewegung zwischen Zusatzführungsscheibe und Welle vermieden werden kann. Diese Befestigungsmittel können vorzugsweise Schrauben, Schellen, Splinte, Draht oder dergleichen sein, welche z.B. durch radialen Druck auf die rotierbare Welle bzw. radialen Eingriff in die rotierbare Welle einen sicheren Halt der Zusatzführungsscheibe an der rotierbaren Welle sicherstellen können.

Die vorliegende Erfindung betrifft auch eine Rundballenpresse mit einem Reparatur-, Umbau- bzw. Nachrüstsatz wie zuvor beschrieben, wobei wenigstens zwei Ersatzpressriemen endlos geschlossen werden können. Hierdurch können die zuvor geschilderten Vorteile des Reparatur-, Umbau- bzw. Nachrüstsatzes an einer Rundballenpresse genutzt werden.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung einer Rundballenpresse bzw. deren Innenlebens (basierend auf Rundballenpresse Serie 900, John Deere) gemäß dem Stand der Technik;
- Fig. 2: eine schematische Darstellung zweier in der Rundballenpresse (basierend auf Rundballenpresse Serie 900, John Deere) verlaufender Pressriemen mit Führungscheiben gemäß dem Stand der Technik;
- Fig. 3: eine perspektivische schematische Darstellung einer Rundballenpresse bzw. deren Innenlebens (basierend auf Rundballenpresse Serie 900, John Deere) mit angewendetem erfindungsgemäßen Reparatur-, Umbau- bzw. Nachrüstsatz; und
- Fig. 4: eine schematische Darstellung der in der Rundballenpresse (basierend auf Rundballenpresse Serie 900, John Deere) verlaufenden Pressriemen mit Führungscheiben mit angewendetem erfindungsgemäßen Reparatur-, Umbau- bzw. Nachrüstsatz.

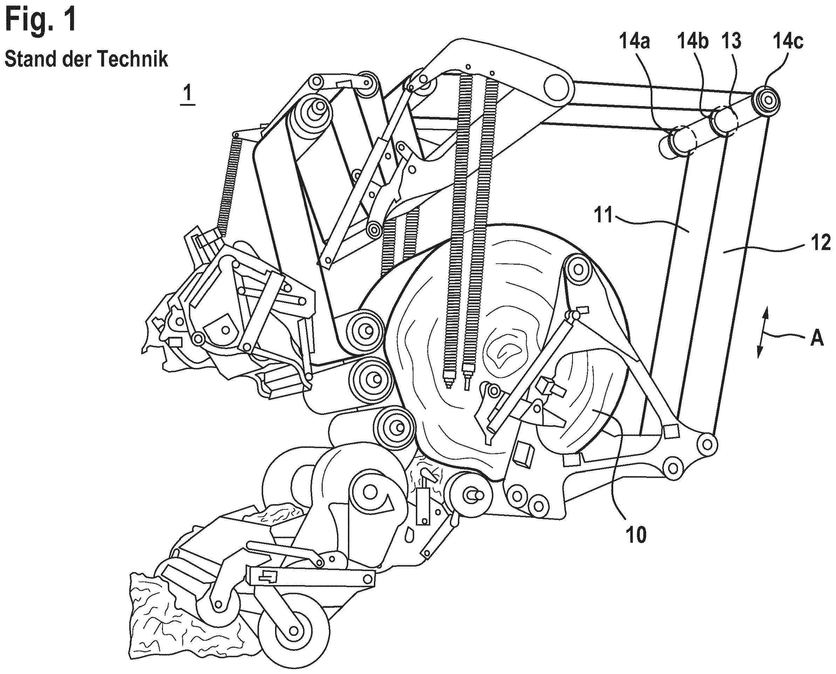

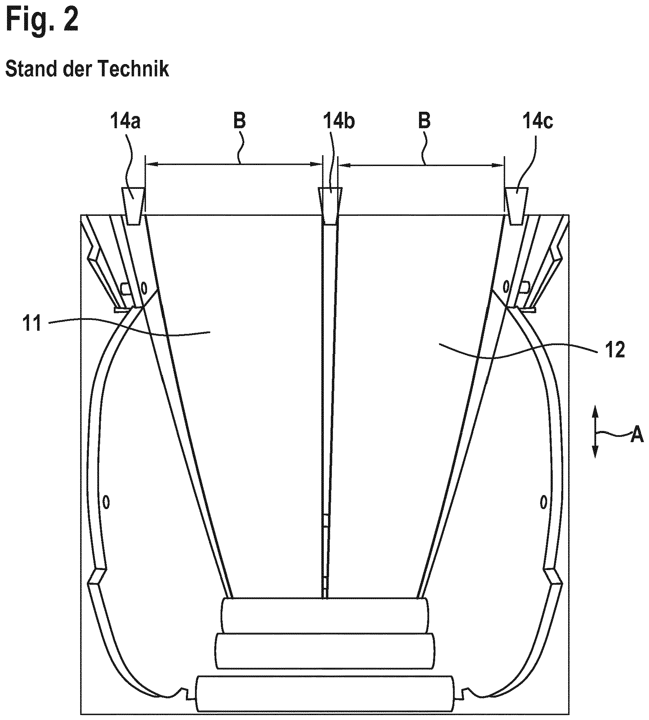

Fig. 1 zeigt eine perspektivische schematische Darstellung einer Rundballenpresse 1 bzw. deren Innenlebens gemäß dem Stand der Technik. Fig. 2 zeigt eine schematische Darstellung zweier in der Rundballenpresse 1 verlaufender Pressriemen 11, 12 mit Führungscheiben 14a, 14b, 14c gemäß dem Stand der Technik.

In einer Rundballenpresse 1 wird ein Rundballen 10 aus losem Erntegut gepresst. Hierzu umgeben den Rundballen 10 während des Pressvorgangs unter anderem mehrere Pressriemen 11, 12, welche in einer Laufrichtung A verlaufen. In diesem Fall sind zwei Pressriemen 11, 12 vorhanden, welche als erster Pressriemen 11 und als zweiter Pressriemen 12 bezeichnet werden können. Diese beiden Pressriemen 11, 12 verlaufen parallel zueinander in der Laufrichtung A und weisen die gleiche Breite B auf. Die beiden Pressriemen 11, 12 sind endlos gewickelt ausgebildet und werden unter anderem über eine Welle 13 gespannt geführt. Auf der Welle 13 sind drei Führungscheiben 14a, 14b, 14c angeordnet, welche der seitlichen Führung der beiden Pressriemen 11, 12 dienen. Dabei wird der erste Pressriemen 11 auf der linken Seite von der linken Führungscheibe 14a und auf der rechten Seite von der mittleren Führungscheibe 14b geführt. Der zweite Pressriemen 12 wird auf der linken Seite von der mittleren Führungscheibe Scheibe 14b und auf der rechten Seite von der rechten Führungsscheibe 14c geführt.

Beim Einsatz einer derartigen bekannten Rundballenpresse 1 kann einer der Pressriemen 11, 12 beschädigt werden oder sogar reißen, so dass dieser ersetzt werden muss. In diesem im Folgenden behandelten Fall ist dies der erste Pressriemen 11, der dann auch als zu ersetzender Pressriemen 11 bezeichnet werden kann. Um in einem solchen Fall die Stillstandzeiten und den Reparaturaufwand zu minimieren, kann der zu ersetzende Pressriemen 11 erfindungsgemäß wie folgt ersetzt werden:

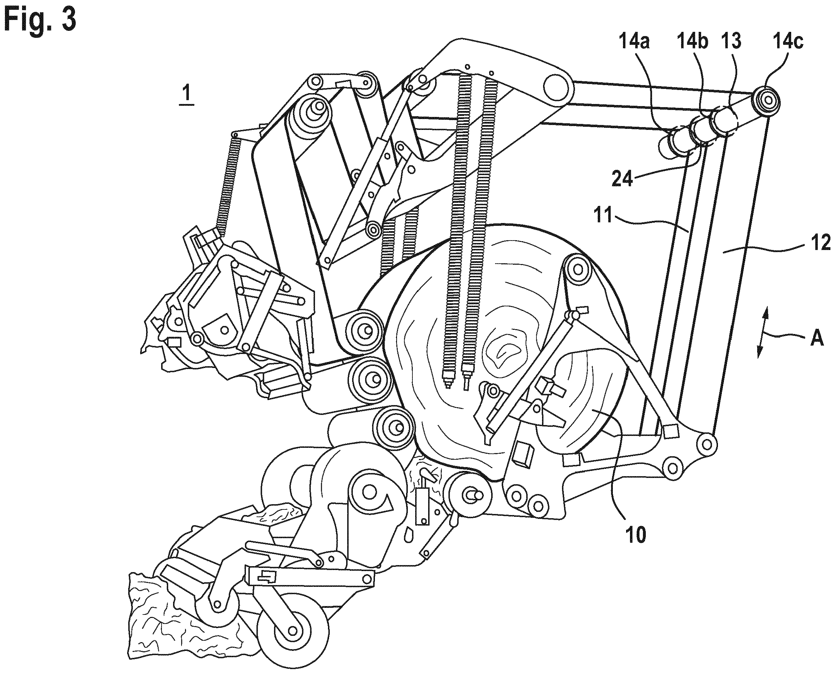

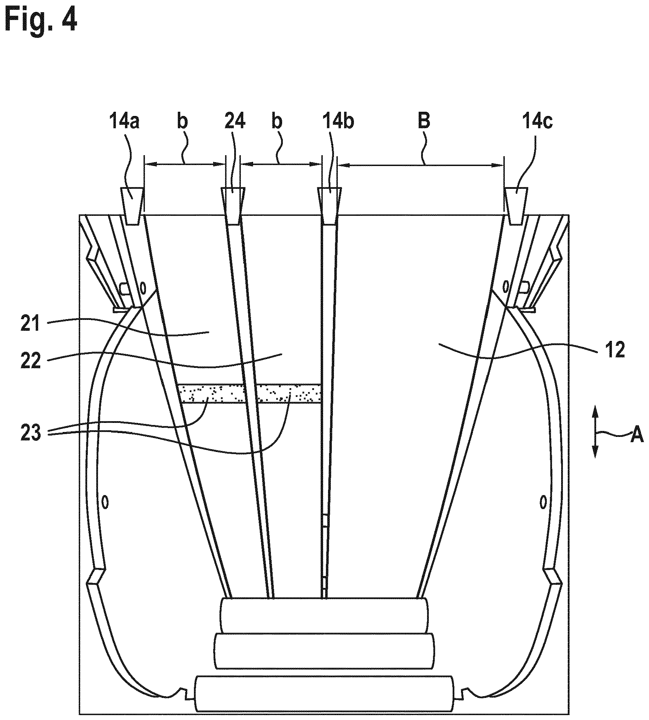

Fig. 3 zeigt eine perspektivische schematische Darstellung einer Rundballenpresse 1 bzw. deren Innenlebens mit angewendetem erfindungsgemäßen Reparatur-, Umbau- bzw. Nachrüstsatz 20. Fig. 4 zeigt eine schematische Darstellung der in der Rundballenpresse 1 verlaufenden Pressriemen 12, 21, 22 mit Führungscheiben 14a, 14b, 14c, 24 mit angewendetem erfindungsgemäßen Reparatur-, Umbau- bzw. Nachrüstsatz 20.

Die Rundballenpresse 1 der Fig. 3 und 4 unterscheidet sich dadurch von der bekannten Rundballenpresse 1 der Fig. 1 und 2, dass hier ein erfindungsgemäßer Reparatur-, Umbau- bzw. Nachrüstsatz 20 eingesetzt wurde. Dieser umfasst einen ersten Ersatzpressriemen 21 und einen zweiten Ersatzpressriemen 22, welche jeweils eine Breite b aufweisen, deren Summe im Wesentlichen der Breite B des zu ersetzenden Pressriemens 11 entspricht. Auf diese Weise kann die Rundballenpresse 1 nach Einbau der beiden Ersatzpressriemen 21, 22 ihren Einsatz im Wesentlichen wie zuvor fortsetzen, so dass der beschädigte Pressriemen 11 erfolgreich ersetzt werden kann. Dabei wird erfindungsgemäß diese Reparatur dadurch vereinfacht und beschleunigt, dass zwei schmalere Ersatzpressriemen 21, 22 einfacher, schneller und mit weniger Hilfsmitteln montiert werden können als ein Pressriemen 11, 12, welcher dem Originalpressriemen 11, 12 entspricht.

Zum endlosen Schließen der beiden Ersatzpressriemen 21, 22 sind Verbindungsmittel 23 vorgesehen, welche Hakenverbinder 23 sind. Hakenverbinder 23 können einfach und schnell und ohne große Hilfsmittel miteinander verbunden und die beiden Ersatzpressriemen 21, 22 auf diese Weise einfach und schnell geschlossen werden. Gleichzeitig stellen sie eine einfache, sichere und hoch belastbare Verbindung dar, die für endlos geschlossenen Pressriemen grundsätzlich bekannt und erprobt ist, jedoch bei Breiten B der zu ersetzenden Pressriemen 11, 12 nicht mehr anwendbar ist. Für die geringere Breite b der beiden Ersatzpressriemen 21, 22 sind Hakenverbinder 23 jedoch sehr wohl anwendbar.

An der rotierbaren Welle 13 der Rundballenpresse 1 wird ferner ein zusätzliches Führungsmittel 24 in Form einer Zusatzführungscheibe 24 fest, d. h. mit der rotierbaren Welle 13 ohne Relativbewegung mitrotierbar, vorgesehen. Die Zusatzführungsscheibe 24 besteht aus zwei im Wesentlichen identischen Halbscheiben, so dass diese einfach und schnell um die rotierbare Welle 13 herum angeordnet, geschlossen und mit der rotierbaren Welle 13 verbunden werden können, ohne die rotierbare Welle 13 dafür entfernen zu müssen. Diese Zusatzführungscheibe 24 führt den ersten Ersatzpressriemen 21 von der rechten Seite und den zweiten Ersatzpressriemen 22 von der linken Seite, ebenso wie dies die Führungscheiben 14a, 14b, 14c hinsichtlich der beiden (Original-)Pressriemen 11, 12 tun. Dabei führt nun die linke Führungscheiben 14a den ersten Ersatzpressriemen 21 von der linken Seite und die mittlere Führungscheiben 14b den zweiten Ersatzpressriemen 22 von der rechten Seite. Dies stellt einen sicheren und geführten Verlauf auch der beiden Ersatzpressriemen 21, 22 sicher.

### Bezugszeichenliste

### (Teil der Beschreibung)

- A: Laufrichtung der Pressriemen 11, 12, 21, 22
- B: Breite eines zu ersetzenden Pressriemens 11, 12
- b: Breite eines Ersatzpressriemens 21, 22

- 1: Rundballenpresse
- 10: Rundballen
- 11: erster (zu ersetzender) Pressriemen, erster Originalpressriemen
- 12: zweiter (zu ersetzender) Pressriemen, zweiter Originalpressriemen
- 13: Welle
- 14a: linke Führungsscheiben der Welle 13
- 14b: mittlere Führungsscheiben der Welle 13
- 14c: rechte Führungsscheiben der Welle 13

- 20: Reparatur-, Umbau- bzw. Nachrüstsatz
- 21: erster Ersatzpressriemen
- 22: zweiter Ersatzpressriemen
- 23: Verbindungsmittel bzw. Hakenverbinder der Ersatzpressriemen 21, 22
- 24: Führungsmittel bzw. Zusatzführungsscheibe der Welle 13

## Patentansprüche

1. Rundballenpresse (1),
**gekennzeichnet durch**
wenigstens einen endlos geschlossenen ersten Ersatzpressriemen (21), wenigstens einen endlos geschlossenen zweiten Ersatzpressriemen (22), und wenigstens einen endlos geschlossenen Pressriemen (12),
wobei der erste Ersatzpressriemen (21), der zweite Ersatzpressriemen (22) und der Pressriemen (12) parallel zueinander verlaufen, und
wobei die beiden Ersatzpressriemen (21, 22) in ihrer gemeinsamen Breite (b und b) im Wesentlichen der Breite (B) des Pressriemens (12) entsprechen.

2. Rundballenpresse (1) nach Anspruch 1,
wobei die Ersatzpressriemen (21, 22) mittels Verbindungsmitteln (23) kraftschlüssig und/oder formschlüssig geschlossen sind.

3. Rundballenpresse (1) nach Anspruch 2,
wobei die Verbindungsmittel (23) zumindest teilweise Hakenverbinder (23) sind.

4. Rundballenpresse (1) nach einem der vorherigen Ansprüche,
wobei die Ersatzpressriemen (21, 22) die gleiche Breite (b) aufweisen.

5. Rundballenpresse (1) nach einem der vorherigen Ansprüche, ferner mit wenigstens einem Führungsmittel (24), welches an der Rundballenpresse (1) derart angeordnet ist, dass die beiden Ersatzpressriemen (21, 22) jeweils seitlich des Führungsmittels (24) verlaufen und hierdurch seitlich zueinander geführt werden.

6. Rundballenpresse (1) nach Anspruch 5,
wobei das Führungsmittel (24) eine Zusatzführungsscheibe (24) ist, welche an einer rotierbaren Welle (13) der Rundballenpresse (1) angeordnet ist.

7. Rundballenpresse (1) nach Anspruch 6,
wobei die Zusatzführungsscheibe (24) geteilt ausgebildet ist, so dass sie um die Welle (13) herum an dieser befestigt ist,

8. Rundballenpresse (1) nach Anspruch 7,
wobei die Zusatzführungsscheibe (24) als zwei Halbscheiben ausgebildet ist.

9. Rundballenpresse (1) nach einem der Ansprüche 6 bis 8, ferner mit Befestigungsmitteln zum kraftschlüssigen und/oder formschlüssigen Befestigen der Zusatzführungsscheibe (24) an der Welle (13) derart, dass eine Relativbewegung zwischen Zusatzführungsscheibe (24) und Welle (13) vermieden werden kann.

## Claims

1. Round baler (1),
**characterized by**
at least one continuously closed first replacement baler belt (21),
at least one continuously closed second replacement baler belt (22), and
at least one continuously closed baler belt (12), wherein the first replacement baler belt (21), the second replacement baler belt (22) and the baler belt (12) run parallel to one another, and
wherein the two replacement baler belts (21, 22) correspond in their joint width (b and b) substantially to the width (B) of the baler belt (12).

2. Round baler (1) according to Claim 1,
wherein the replacement baler belts (21, 22) are closed in a force-fitting and/or form-fitting manner by means of connecting means (23).

3. Round baler (1) according to Claim 2,
wherein the connecting means (23) are at least partially hook connectors (23).

4. Round baler (1) according to one of the preceding claims,
wherein the replacement baler belts (21, 22) have the same width (b).

5. Round baler (1) according to one of the preceding claims, furthermore having
at least one guide means (24) which is arranged on the round baler (1) in such a manner that the two replacement baler belts (21, 22) each run to the side of the guide means (24) and are thereby guided laterally with respect to each other.

6. Round baler (1) according to Claim 5,
wherein the guide means (24) is an auxiliary guide disc (24) which is arranged on a rotatable shaft (13) of the round baler (1).

7. Round baler (1) according to Claim 6,
wherein the auxiliary guide disc (24) is configured in a split manner such that it is fastened to the shaft (13) around the latter.

8. Round baler (1) according to Claim 7,
wherein the auxiliary guide disc (24) is configured as two half discs.

9. Round baler (1) according to one of Claims 6 to 8, furthermore having
fastening means for fastening the auxiliary guide disc (24) to the shaft (13) in a force-fitting and/or form-fitting manner such that a relative movement between the auxiliary guide disc (24) and shaft (13) can be avoided.

## Revendications

1. Presse à balles rondes (1), **caractérisée par**
au moins une première courroie de presse de rechange fermée sans fin (21)
au moins une deuxième courroie de presse de rechange fermée sans fin (22), et
au moins une courroie de presse fermée sans fin (12), dans laquelle la première courroie de presse de rechange (21), la deuxième courroie de presse de rechange (22) et la courroie de presse (12) s'étendent parallèlement l'une à l'autre, et
dans laquelle les deux courroies de presse de rechange (21, 22) correspondent avec leur largeur commune (b et b) essentiellement à la largeur (B) de la courroie de presse (12).

2. Presse à balles rondes (1) selon la revendication 1, dans laquelle les courroies de presse de rechange (21, 22) sont fermées par force et/ou par emboîtement au moyen de moyens de liaison (23).

3. Presse à balles rondes (1) selon la revendication 2, dans laquelle les moyens de liaison (23) sont au moins en partie des attaches à crochet (23).

4. Presse à balles rondes (1) selon l'une quelconque des revendications précédentes, dans laquelle les courroies de presse de rechange (21, 22) présentent la même largeur (b).

5. Presse à balles rondes (1) selon l'une quelconque des revendications précédentes, avec en outre au moins un moyen de guidage (24), qui est disposé sur la presse à balles rondes (1) de telle manière que les deux courroies de presse de rechange (21, 22) s'étendent chacune sur le côté du moyen de guidage (24) et soient ainsi guidées latéralement l'une à l'autre.

6. Presse à balles rondes (1) selon la revendication 5, dans laquelle le moyen de guidage (24) est un disque de guidage supplémentaire (24), qui est disposé sur un arbre rotatif (13) de la presse à balles rondes (1).

7. Presse à balles rondes (1) selon la revendication 6, dans laquelle le disque de guidage supplémentaire (24) est réalisé sous forme divisée, de telle manière qu'il puisse être fixé à l'arbre (13) autour de celui-ci.

8. Presse à balles rondes (1) selon la revendication 7, dans laquelle le disque de guidage supplémentaire (24) est formé par deux demi-disques.

9. Presse à balles rondes (1) selon l'une quelconque des revendications 6 à 8, avec en outre des moyens de fixation pour la fixation par force et/ou par emboîtement du disque de guidage supplémentaire (24) à l'arbre (13), de telle manière qu'un mouvement relatif entre le disque de guidage supplémentaire (24) et l'arbre (13) puisse être évité.
